(19) Europäisches Patentamt
European Patent Office
Office européen des brevets

(11) **EP 2 093 644 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(51) Int Cl.:
*G05D 23/20* (2006.01)     *G05D 23/30* (2006.01)

(21) Anmeldenummer: **08003322.8**

(22) Anmeldetag: **23.02.2008**

(54) **Verfahren und Vorrichtung zur Beeinflussung einer Temperaturmessgrösse an dem Eingang eines Heizungsreglers**

Method and device for influencing a temperature measurement at the entry of a heating regulator

Procédé et dispositif pour modifier une grandeur de température mesurée à l'entrée d'un régulateur de chauffage

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**26.08.2009 Patentblatt 2009/35**

(73) Patentinhaber: **Techem Energy Services GmbH 65760 Eschborn (DE)**

(72) Erfinder:
• **Klee, Helmut 61118 Bad Vilbel (DE)**

• **Heisser, Lothar 55299 Nackenheim (DE)**

(74) Vertreter: **KEIL & SCHAAFHAUSEN Patentanwälte Cronstettenstraße 66 60322 Frankfurt am Main (DE)**

(56) Entgegenhaltungen:
**EP-A1- 1 884 845     EP-A2- 1 916 585 EP-A2- 1 927 812**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Es werden ein Verfahren über eine Vorrichtung zur Beeinflussung einer Temperaturmessgröße an dem Eingang eines Heizungsreglers beschrieben. Bei bestehenden Heizungsanlagen sind häufig Außentemperatursensoren und/ oder Raumtemperatursensoren vorgesehen, die an den die Vorlauftemperatur in der Heizungsanlage steuernden oder regelnden Heizungsregler angeschlossen sind. Unter Berücksichtigung der Außentemperatur und/oder der aktuellen Vorlauftemperatur in der Heizungsanlage regelt der Heizungsregler die Vorlauftemperatur des Heizmediums, mit dem die gesamte Heizungsanlage versorgt werden soll. Ziel einer solchen Regelung ist es, unter Berücksichtigung der äußeren Bedingungen (Witterung) die für die Heizung zur Verfügung gestellte Wärmemenge besser an den tatsächlichen Wärmebedarf in der Heizungsanlage anzupassen und auf diese Weise primäre Heizenergie (Öl, Gas) einzusparen.

In der Praxis hat sich gezeigt, dass derartige Heizungsregler zwar besser sind als Heizungsanlagen, die unabhängig von äußeren Einflüssen die Heizungsanlage immer mit einer vorgegebenen, dem maximalen Auslegungsfall entsprechenden Vorlauftemperatur des Heizmediums versorgen. Allerdings vermögen auch witterungsgeführte Heizungssteuerungen, bei denen als Führungsgröße die tatsächlich herrschende Außentemperatur verwendet wird, noch keine optimale Energieeinsparung zu erreichen, da die Außentemperatur nur einer von vielen Faktoren ist, die den Wärmebedarf einer Heizungsanlage charakterisieren.

Typischerweise wird durch eine derartige außentemperaturgeführte Regelung aufgrund einer an das Gebäude und die Nutzerwünsche angepassten Heizungskennlinie eine Vorlauftemperatur des Heizmediums vorgegeben, die der Heizungsregler der Heizungsanlage anschließend zur Verfügung stellt. Hierzu kann der Heizungsregler vorzugsweise auch noch die aktuelle Vorlauftemperatur messen und auf den gewünschten Wert einregeln.

Aus der DE 42 27 515 A1 ist eine witterungsgeführte Heizungssteuerung bekannt, bei der die durch die Heizungssteuerung eingestellte Vorlauftemperatur nicht nur von der Außentemperatur, sondern zusätzlich von der relativen Feuchte der Außenluft abhängt, die das Wohlbehagensgefühl deutlich mitbestimmt. Messtechnisch wird die zusätzliche Berücksichtigung der relativen Feuchte dadurch erreicht, dass parallel zu dem Messwiderstand des Außentemperaturfühlers, der an einen entsprechenden Anschluss des Heizungsreglers angeschlossen ist, in Abhängigkeit von der relativen Feuchte ein paralleler Widerstand zugeschaltet wird, so dass sich der Gesamtwiderstand ändert und der Heizungsregler somit von einer anderen Führungsgröße ausgeht. Unter Anwendung seiner Kennlinie stellt der Heizungsregler also eine geänderte Vorlauftemperatur ein. Hierbei ist jedoch nachteilig, dass die Interpretation des geringeren Wärmebedarfs ausschließlich dem Heizungsregler überlassen wird, indem ihm eine andere Außentemperatur vorgeschlagen wird. Die konkrete Änderung der Vorlauftemperatur hängt jedoch von der Regelcharakteristik des Heizungsreglers ab und kann daher nicht präzise vorhergesagt werden.

Ferner besteht das Problem, dass die Kennlinien der Sensoren häufig nicht bekannt sind. Natürlich ist es möglich, derartige Kennlinien durch Messungen aufzunehmen und der weiteren Anwendung solcher Verfahren dann zugrunde zu legen. Hierbei ist es jedoch üblich, dass diese Messungen im Vorfeld durchgeführt werden, was zu einem erhöhten Installationsaufwand führt.

Die DE 40 23 439 A1 beschreibt eine Schaltungsanordnung zur Regelung der Temperatur in einem Raum, in dem der Thermostat eines die Zufuhr eines Heizmediums regelnden Ventils mit einem elektrischen Heizwiderstand ausgerüstet ist, der mit Strom durchflossen werden kann, um dem Thermostaten des Ventils eine höhere Raumtemperatur zu simulieren. Dann drosselt das Heizkörperventil den Zufluss des Heizmediums stärker und stellt somit eine niedrigere Raumtemperatur ein. Hierdurch lässt sich zwar gezielt eine Raumtemperaturabsenkung erreichen, die Einstellung der Vorlauftemperatur einer Heizungsanlage kann auf diese Weise jedoch nicht verwirklicht werden. Außerdem ist der Eingriff in jedes Stellventil einer Heizfläche der gesamten Heitungsanlage sehr aufwendig.

Moderne Heizungsregelungen, wie sie beispielsweise in der EP 1 456 727 B1 oder der DE 10 2005 012 597 A1 beschrieben sind, zielen darauf ab, die Vorlauftemperatur einer Heizungsanlage entsprechend dem aktuellen Wärmebedarf des Heizkreises oder Gebäudes zu ermitteln, der aus Heizkörperventilstellungen oder Temperaturmessungen im Rahmen der Heizwärmeerfassung bestimmt werden. Aufgrund des Wärmebedarfs ist es dann möglich, eine sinnvolle Änderung der Vorlauftemperatur anzugeben. Gerade bei älteren Heizungen besteht jedoch das Problem, dass die Heizungsregler keinen separaten Eingang zur Vorgabe von Korrektursignalen besitzen, so dass es nicht möglich ist, dem Heizungsregler einen Korrekturwert für die angestrebte Vorlauftemperatur unmittelbar mitzuteilen.

Aufgabe der vorliegenden Erfindung ist es daher, einer beliebigen Heizkörperregelung, die einen Sensoreingang für einen Außentemperaturfühler und/oder einen Vorlauftemperaturfühler aufweist, einen Korrekturwert für die Vorlauftemperatur präzise aufzuprägen.

Diese Aufgabe wird erfindungsgemäß mit dem Merkmalen der Ansprüche 1 und 14 gelöst.

Bei dem erfindungsgemäßen Verfahren zur Beeinflussung einer Temperaturmessgröße an dem Eingang eines Heizungsreglers werden ein der Vorlauftemperatur der Heizungsanlage entsprechender Widerstandswert eines Vorlauf- oder Außentemperatursensors mit unbekannter Kennlinie und ein der Vorlauf- oder Außentemperatur der Heizungsanlage entsprechender Widerstandwert eines Referenztemperatursensors mit bekannter Kennlinie erfasst, wobei aus dem Widerstandswert des Referenztemperatursensors ein der Vorlauf- oder Außentemperatur entsprechender Referenztemperaturwert bestimmt und damit eine Kennlinie für den Vorlauf- bzw. Außentemperatursensor ermittelt wird. Der Referenztemperatursensor mit bekannter Kennlinie kann beispielsweise in eine geeignete Vorrichtung zur Durchführung des erfindungsgemäßen Verfahrens mit integriert sein. Dies erlaubt es, einen in einer Heizungsanlage fest installierten Außen- oder Vorlauftemperaturfühler weiter zu benutzen und dessen a priori unbekannte Kennlinie mittels einer Referenzmessung zu bestimmen.

Indem der Referenztemperatursensor aus einer Messung der Vorlauftemperatur der Heizungsanlage oder der Außentemperatur der Heizungsanlage (bei bekannter oder angenommener Heizkennlinie, welchen einen eindeutigen Zusammenhang zwischen Außentemperatur und Vorlauftemperatur der Heizungsanlage herstellt) erfindungsgemäß zur Ermittlung der Vorlauftemperatur der Heizungsanlage eingesetzt wird, ist die Anwendung des beschriebenen Verfahrens nicht auf Heizungsanlagen mit einem Vorlauftemperatursensor beschränkt. Grundsätzlich ist es auch möglich, das erfindungsgemäße Verfahren bei ausschließlich außentemperaturgeführten Heizungsanlagen einzusetzen, da die Heizungsregelung über die Heizungskennlinie einem bestimmten Außentemperaturwert eine definierte Vorlauftemperatur zuordnet. Daher muss der Temperatursensor, dessen Widerstandswert über die zu ermittelnde Kennlinie mit der Vorlauftemperatur korreliert werden soll, nicht notwendigerweise die Vorlauftemperatur messen. Es ist ausreichend, wenn dieser Sensor eine mit der Vorlauftemperatur fest korrelierte Temperatur misst, bspw. also die Außentemperatur, die über die in der Heizungsanlage eingestellte Heizungskennlinie eindeutig mit der Vorlauftemperatur verbunden ist.

Aus dem Referenztemperaturwert oder dem gemessenen Temperaturwert und der ermittelten Kennlinie wird dann ggf. unter Anwendung der bekannten Heizungskennlinie der in der Heizungsanlage herrschende aktuelle Vorlauftemperaturwert ermittelt.

Erfindungsgemäß wird bei dem beschriebenen Verfahren ferner ein insbesondere von außen beispielsweise durch eine Wärmeleistungsadaptionsregelung vorgegebener Korrekturtemperaturwert für die Vorlauf- oder Außentemperatur erfasst. Anschließend werden der aktuelle Vorlauftemperaturwert und der Korrekturtemperaturwert zu einem Vorgabetemperaturwert für die Vorlauftemperatur zusammengefasst und mittels der zuvor bestimmten Kennlinie ein dem Vorgabetemperaturwert entsprechender Vorgabewiderstandswert bestimmt. Dieser Vorgabewiderstandswert wird in einem Widerstandssimulator eingestellt und als simulierter Widerstandswert an den Heizungsregler über den vorhandenen Sensoranschluss ausgegeben. Grundsätzlich ist es natürlich immer möglich, die Vorlauftemperaturwerte über bekannte oder angenommene Heizungskennlinien in Außentemperaturwerte umzurechnen. Welche der Größen gewählt wird hängt insbesondere davon ab, welche Eingangsgröße der Heizungsregler erwartet.

Zur Ermittlung der Kennlinie des Außen- bzw. Vorlauftemperatursensors mit a priori unbekannter Kennlinie werden erfindungsgemäß jeweils Messwertpaare, aufgebaut aus dem Widerstandswert des Vorlauf- oder Außentemperatursensors und dem Referenztemperaturwert des Referenztemperatursensors, ausgewertet, indem mindestens zwei Schätzfunktionen mit unterschiedlicher Kurvenform durch Parameterbestimmung in einem sogenannten Fit beispielsweise nach dem Least-Square-Ansatz an die Messwertpaare angepasst werden und die Güte der Anpassung zur Auswahl der Schätzfunktion als Kennlinie herangezogen wird. Die Art der ausgewählten Schätzfunktion und die Funktionsparameter werden dann in einem Kennlinienspeicher zur Parameterablage hinterlegt, auf den durch die Vorrichtung bzw. in der Vorrichtung befindliche Einrichtungen nach Bedarf zugegriffen werden kann.

Die einzelnen Messwertpaare werden vorzugsweise zu verschiedenen Zeitpunkten und bei unterschiedlichen Vorlauftemperaturen erfasst. Dies kann dadurch erreicht werden, dass die Messwertpaare zyklisch in einem vorgegebenen zeitlichen Rhythmus erfasst werden, sodass über den tageszeitlichen beziehungsweise jahreszeitlichen Verlauf eine nahezu vollständige Kennlinie parametriert werden kann. Durch die erfindungsgemäß vorgegebenen mehreren Schätzkurven lassen sich für verschiedene bekannte Sensortypen optimale Kennlinienverläufe automatisch erzeugen.

Um das erfindungsgemäße Verfahren auch bei Inbetriebnahme einer Einrichtung zur Vorlauftemperaturadaption durch Vorgabe von Korrekturtemperaturwerten möglichst schnell ausführen zu können, wird die Ermittlung der Kennlinien bei Inbetriebnahme für jede Kurvenform dann vorgenommen, wenn die jeweils minimale Anzahl der benötigten Messwertpaare vorliegt. In diesem Fall ist der Fehler in der Kennlinienermittlung zwar noch vergleichsweise groß. Dies wird jedoch in Kauf genommen, um eine möglichst schnelle Betriebsaufnahme der Anlage zu ermöglichen. Alternativ wäre es auch denkbar, die Ermittlung der Kennlinie erst dann zu starten, wenn genügend Messwertpaare für eine zuverlässige Ermittlung der Kennlinie vorliegen. Als Grenze können insbesondere drei Messwertpaare dienen. Gemäß einer bevorzugten Ausführungsform des erfindungsgemäßen Verfahrens wird als Ausgangspunkt bei zwei vorhandenen Messwertpaaren eine Gerade als Schätzfunktion eingesetzt und erst bei mehreren auswertbaren Messwertpaaren die eigentlichen Schätzfunktionen verwendet. Kurz nach Inbetriebnahme können können auch Kennlinien bekannter, typischer Weise verwendeter Sensoren und ihren typischen Parametern mit den ersten vorhanden Messwerten korreliert werden. Wenn eine bekannte Sensorfunktion in ihrer bekannten Parametrierung eindeutig bevorzugt ist, wird diese ausgewählt und durch folgende Messungen bestätigt oder korrigiert.

Um bei der Ermittlung der Kennlinie mit sehr wenigen Messwertpaaren schnell eine Verbesserung der Kennlinienermittlung zu erreichen, wird die Ermittlung der Kennlinie erfindungsgemäß wiederholt durchgeführt, kurz nach einer Inbetriebnahme insbesondere bei jedem neuen Messwertpaar. Da sich der Rechenaufwand für eine derartige Ermittlung in vertretbaren Grenzen hält und die Anwendung nicht übermäßig zeitkritisch ist, kann diese Ermittlung der Kennlinie erfindungsgemäß auch ohne Zeitbegrenzung mit jedem neuen Messwertpaar oder in vordefinierten Abständen (beispielsweise jedes n-te Messwertpaar oder alle x Minuten) durchgeführt werden.

Vorzugsweise wird die vorbeschriebene Ermittlung der Kennlinien mit einer Selektion der geeigneten Kennlinie aus einer Mehrzahl von Schätzkurven jedoch nur solange durchgeführt, bis eine sichere Auswahl der geeigneten Kennlinie aus den mehreren Schätzkurven möglich ist. Als Kriterium hierfür kann die Güte der einzelnen Anpassungen an die verschiedenen Schätzfunktionen herangezogen werden, wobei gegebenenfalls nach jeweils längeren Zeitintervallen anhand der Messdaten noch einmal eine Auswahl der geeigneten Kennlinie zu Kontrollzwecken durchgeführt werden kann. Hierdurch lässt sich die benötigte Rechenleistung reduzieren und dennoch eine dynamische Anpassung der Kennlinie an beispielsweise einen bei einer Wartung ausgetauschten Sensor erreichen. Wenn es auf die Rechenleistung nicht ankommt, wird eine Änderung in dem System beispielsweise durch Austausch eines Sensors bei einer Wartung besonders schnell selbsttätig erkannt, wenn die Auswahl der Kennlinien aus den mehreren Schätzfunktionen bei jedem neuen Messwert durchgeführt wird.

Erfindungsgemäß kann bei der Ermittlung der Kennlinie eine Schätzfunktion dann fest ausgewählt werden, wenn die Güte einer Schätzfunktion signifikant besser ist als die Güte der anderen, ebenfalls angepassten Schätzfunktionen. Dazu kann beispielsweise auch der Fehler bei der Bestimmung des Schätzwertes und/oder der Güte als Kriterium herangezogen werden. So kann beispielsweise überprüft werden, ob der Schätzwert und/oder die Güte der besten Schätzfunktion einschließlich ihres Fehlerbereichs außerhalb des Schätzwerts beziehungsweise der Güte der anderen Schätzfunktionen mit ihren Fehlerbereichen liegt. Wenn dies der Fall ist, kann mit großer Wahrscheinlichkeit davon ausgegangen werden, dass die beste Schätzfunktion gefunden ist. Diese kann dann als Kennlinie eingesetzt und die Überprüfung auf Vorliegen der besten Schätzfunktion abgebrochen werden.

Insbesondere nach einer erfolgten festen Auswahl einer Schätzfunktion können die Parameter der als Kennlinie eingesetzten Schätzfunktion nach der Ermittlung eines (jeden) oder mehrerer neuer Messwertpaare aktualisiert werden. Dazu kann eine neue Anpassung der Parameter der Schätzfunktion erfolgen, wie dies bis zu einer Auswahl der Schätzfunktion für alle Schätzfunktionen ohnehin durchgeführt wird. Nach der festen Auswahl einer Schätzfunktion als Kennlinie werden dann nur noch deren Parameter angepasst.

Ein Problem bei der Erfassung von Messwertpaaren kann darin bestehen, dass der Referenztemperatursensor und der Vorlauf- oder Außentemperatursensor unterschiedlich gut an die Messstelle angekoppelt sind. Bei einem Vorlauftemperaturrohr erfolgt die Ankopplung häufig durch Anbringen des Sensors an dem Außenrohr. Je nach für jeden Sensor erreichten Wärmefluss von dem Rohr an das Sensorelement werden Änderungen in der Temperatur früher oder später wahrgenommen. Ähnliche Probleme können sich bei Außentemperatursensoren bspw. durch unterschiedliche, das Sensorelement umgebende Gehäuse ergeben. Eine in der Praxis häufig vorkommende, unterschiedlich gute Wärmeankopplung kann daher zu Phasenverschiebungen bei der Erfassung von Messwertpaaren führen, welche die Genauigkeit bei der Bestimmung der Kennlinie für den Vorlauf- oder Außentemperatursensor verschlechtern oder eine Ermittlung sogar unmöglich machen. Um dies zu vermeiden, kann erfindungsgemäß ein Dynamikfilter verwendet werden, der Messwertpaare nur dann verwendet, wenn die Temperaturdynamik in dem System einen gewissen vorgebbaren Grenzwert nicht überschreitet. Dazu wird erfindungsgemäß der zeitliche Verlauf der Messwerte mindestens eines Temperatursensoren überwacht und ausgewertet. Hierfür bietet sich insbesondere der Referenztemperatursensor an, da dieser in einer Heizungsanlage zusammen mit einer erfindungsgemäßen Vorrichtung installiert wird und dessen thermische Ankopplung so besser kontrollierbar ist als die des unbekannten Sensors. Wenn die Steigung und Krümmung des zeitlichen Temperatur- und/oder Messwertverlaufs dieses Temperatursensors unter einem definierten Grenzwert liegt, ist die Temperaturdynamik im System geeignet, um Messwertpaare aufzunehmen. Andernfalls werden die Messwertpaare nicht berücksichtigt. Damit die Steigung und die Krümmung des Temperaturverlaufs sicher berechnet werden können, ist es sinnvoll, die Temperaturwerte und/oder die Messwerte zunächst durch gleitende Mittelwertbildung zu glätten und anschließend um einen zeitlich verschobenen Arbeitspunkt die Steigung und/oder Krümmung des Temperatur- und/oder Messwertverlaufs zu berechnen. Liegen die berechneten Werte für die Steigung und/oder Krümmung bei einer vorgegebenen Anzahl hintereinander folgender Temperaturwerte unter einem definierten Grenzwert, werden die Messwertpaare akzeptiert und bspw. in einem Speicher zu Messwertablage integriert. Die vorbeschriebene Auswertung der Temperaturdynamik des Systems kann bspw. mit einer Kennlinieneinrichtung implementiert sein.

Um einerseits die Anzahl der in dem System vorhandenen Messwertpaare zu begrenzen und andererseits die Messwerthistorie nicht außer Acht zu lassen, kann erfindungsgemäß ein neues Messwertpaar mit bereits existierenden Messwertpaaren verschmolzen werden. Nach der Verschmelzung bildet das neue und das existierende Messwertpaar ein aktualisiertes Messwertpaar, in dem sowohl die Informationen des alten Messwertpaares als auch des neuen Messwertpaares enthalten sind. Insbesondere kann das existierende Messwertpaar selbst bereits aufgrund einer Verschmelzung entstanden sein. Die einfachste Verschmelzungsregel wäre eine lineare Regression der Widerstandswerte und gegebenenfalls der Temperaturwerte, gegebenenfalls mit bestimmter Gewichtung der Messwertparameter.

Um die Auswirkungen der Verschmelzung in der Kennlinie lokal zu begrenzen, können die Temperaturwerte vordefinierten Temperaturintervallen zugeordnet und nur einem Temperaturintervall zugeordnete Messwertpaare verschmolzen werden. Vorzugsweise findet sich in einem Temperaturintervall genau ein Messwertpaar. Statt einer Verschmelzung sowohl der Widerstandswerte als auch der Temperaturwerte kann jeweils der aktuelle Temperaturwert als Stützwert in dem Temperaturintervall herangezogen werden und nur die alten Widerstandswerte mit dem aktuellen Widerstandswert verschmolzen werden.

Um die Messwertpaare im Laufe der Zeit zu glätten und zu erreichen, dass die mittleren Fehler der Schätzfunktion zur wahren Funktion immer kleiner sind als die Einzelfehler eines Messwertes zu der wahren Funktion, die der realen Kennlinie des Widerstandstemperatursensors entspricht, können erfindungsgemäß die Widerstandswerte unter Berücksichtigung der Schätzfunktion verschmolzen werden. Dazu wird der verschmolzene Widerstandswert aus der Kennlinie beziehungsweise Schätzfunktion berechnet und um relative Abweichungen des existierenden und des neuen Messwertpaares korrigiert.

Dabei kann die Verschmelzung erfindungsgemäß eine Gewichtung vornehmen, wobei der neue Widerstandswert und/oder der neue Temperaturwert des Messwertpaares mit geringerer Gewichtung eingeht als der jeweilige, bereits existierende alte Wert (Widerstandswert oder Temperaturwert). Die Gewichtung des neuen Werts kann dabei etwa zwischen ein Drittel und ein Sechstel betragen. Als besonders bevorzugte Gewichtung hat sich eine Gewichtung des neuen Werts mit 20% und des existierenden Werts mit 80% als sinnvoll erwiesen, die jeweils fest vorgegeben sind. Dadurch wird einerseits die Wertehistorie berücksichtigt, andererseits aktualisiert sich die Kennlinie als dynamische Kennlinie auch bei Änderungen des Sensors recht zügig, so dass eine dynamische Anpassung der Kennlinie erreicht wird. Erfindungsgemäß kann eine Dynamisierung der Kennlinie auch dadurch erfolgen, dass alle Messwertpaare gelöscht werden und die aktuell bestehende Kennlinie als Vorgabekennlinie genutzt wird. Ein solches Vorgehen kann beispielsweise zyklisch zu vorgegebenen Zeitpunkten, etwa einmal monatlich, erfolgen.

Als Schätzfunktionen können eine Arrheniusgleichung, ein Polynom zweiten Grades, eine Exponentialfunktion, eine Gerade und/oder eine freie Funktion verwendet werden, wobei die freie Funktion eine typische außentemperaturgeführte Heizungskennlinie mit einer Temperatur-Widerstands-Kennlinie verbindet. Die freie Funktion, beispielsweise ein Polynom höheren Grades, findet dann Anwendung, wenn für einen Außentemperatursensor erfindungsgemäß eine Widerstands-Temperatur-Kennlinie erzeugt wird, die den der Außentemperatur entsprechenden gemessenen Widerstandswert mit dem Vorlauftemperaturwert verbindet. Es soll also der Fall einer außentemperaturgeführten Heizungsanlage abgedeckt werden, bei dem die Vorlauftemperatur eine Funktion der Außentemperatur und der Heizungskennlinie ist. Eine Arrheniusgleichung, eine Polynomfunktion zweiten Grades und eine Exponentialfunktion bilden die Kennlinien typischer Temperatur-Widerstandssensoren ab, die einen der Temperatur entsprechenden Widerstandswert ausgeben. Solange nur wenige Messwertpaare vorliegen, bildet eine Gerade als Schätzfunktion häufig die ausgewogenste Beschreibung bei einer Extrapolation auf Kennlinienbereiche, in denen noch keine Messwerte existieren. Die vorliegende Erfindung ist jedoch nicht auf die Auswahl der vorbeschriebenen Schätzfunktionen beschränkt, die je nach Sensortyp und Anwendungsfall auch noch ergänzt werden können.

Gemäß einer bevorzugten Ausgestaltung des erfindungsgemäßen Verfahrens wird vorgeschlagen, bei der Inbetriebnahme und/oder nach einem Löschen aller Messwertpaare eine Startfunktion als Schätzfunktion vorzugeben, bis eine bessere Schätzfunktion ermittelbar ist. Hierfür wird als Kriterium insbesondere die Güte der Anpassung an eine Schätzfunktion verwendet. Als Startkurve bei der Inbetriebnahme bietet sich, wie bereits erläutert, vorzugsweise eine Gerade an, die eine lineare Regression der Messwertpaare ermöglicht. Sofern Hinweise auf den verwendeten Sensortyp vorliegen, können auch dem Sensortyp angepasste Schätzfunktionen als Startkurve vorgegeben werden. Nach dem Löschen von Messwertpaaren wird vorzugsweise die letzte verwendete Kurve als Startkurve angesetzt.

Zur weiteren Stabilisierung des Verfahrens und zur schnelleren Konvergenz der Messwertpaäre an die Schätzfunktion können erfindungsgemäß auch Messwertpaare verworfen werden, die nicht zu der gefundenen Schätzfunktion passen, insbesondere durch Bestimmung der Einzelfehler der Messwertpaare zu der Schätzfunktion und Vergleich mit einem festgelegten Grenzwert. Dies erfolgt vorzugsweise erst dann, wenn eine ausreichende Anzahl von Messwertpaaren zur Verfügung steht, die eine vergleichsweise sichere Abschätzung der Schätzfunktion zulassen. In diesem Zusammenhang kann beispielsweise durch einen Zähler gezählt werden, wie viele Messwertpaare in Folge bezogen auf die Gesamtkurve und/oder das jeweilige Temperaturintervall nicht zu der Schätzfunktion passen. Treten nacheinander viele signifikante Abweichungen von der Schätzfunktion auf, deutet dies auf einen systematischen Fehler beispielsweise durch Austausch oder starke Alterung des Sensors hin. In diesem Fall können alle Messwertpaare gelöscht und die Ermittlung der Kennlinie von Neuem durchgeführt werden.

Neben dem Verfahren bezieht sich die vorliegende Erfindung auch auf eine Vorrichtung, die insbesondere zur Durchführung des vorbeschriebenen Verfahrens eingerichtet ist. Eine erfindungsgemäße Vorrichtung zur Beeinflussung einer Temperaturmessgröße an dem Eingang eines Heizungsreglers weist insbesondere einen Messanschluss zum Anschließen eines Vorlauftemperatur- oder Außentemperatursensors einer Heizungsanlage auf, der einen der Vorlauftemperatur oder Außentemperatur entsprechenden Widerstandswert ausgibt. Ferner ist in die Vorrichtung ein an einen Referenzanschluss angeschlossener Referenztemperatursensor vorgesehen, der die Vorlauftemperatur der Heizungsanlage misst, wobei der Referenztemperatursensor im Falle eines Vorlauftemperatursensors der Heizanlage vorzugsweise in dessen Nähe angebracht ist. Sofern in der Heizungsanlage nur ein Außentemperatursensor vorgesehen ist, ist der Referenztemperatursensor vorzugsweise in dem Bereich der Heizungsanlage angeordnet, in dem die durch den Heizungsregler ausgegebene Vorlauftemperatur besonders gut gemessen werden kann.

Die Vorrichtung weist ferner einen Korrekturanschluss zur Vorgabe eines Korrekturtemperaturwertes und einen Ausgabeanschluss zum Ausgeben eines simulierten Widerstandswertes an den Heizungsregler auf. Ferner sind in der Vorrichtung eine Kennlinieneinrichtung zur Ermittlung der Kennlinie des Vorlauf- oder Außentemperatursensors, eine Vorgabeeinrichtung zur Ermittlung eines Vorgabewiderstandswerts und eine Simulationseinrichtung zur Simulation des auszugebenden Widerstandswerts entsprechend dem Vorgabewiderstand vorgesehen, wobei die Kennlinieneinrichtung dazu eingerichtet ist, mindestens zwei Schätzfunktionen mit unterschiedlicher Kurvenform durch Parameterbestimmung an die Messwertpaare anzupassen beziehungsweise zu fitten und die Kennlinie aufgrund der Güte der Anpassung der verschiedenen Schätzfunktionen auszuwählen. Darüber hinaus kann die Vorrichtung erfindungsgemäß derart eingerichtet sein, dass jeder der vorbeschriebenen Verfahrensschritte ausführbar ist.

Dazu kann die Kennlinieneinrichtung jeweils eine Einrichtung zur Ermittlung der Referenztemperatur, einen Speicher zur Messwertablage, einen Speicher zur Parameterablage für die ermittelten Parameter als Kennlinie ausgewählten Schätzfunktion und ein Rechenwerk zur Kennlinienbestimmung aufweisen, die erfindungsgemäß eingerichtet sind.

Vorzugsweise weist die Vorgabeeinrichtung ein Rechenwerk zur Berechnung der Temperatur aus dem Widerstandswert unter Verwendung der Kennlinie und zur Berechnung des Widerstandswerts aus der Temperatur unter Verwendung der inversen Kennlinie auf.

Die Vorgabeeinrichtung zur Ermittlung eines Vorgabewiderstandswerts weist ggf. ein Rechenwerk zur Ermittlung des Temperaturwerts aus dem Widerstandswert unter Verwendung der Kennlinie und ein Rechenwerk zur Berechnung des Vorgabewiderstandswerts aus dem Vorgabetemperaturwert unter Verwendung der Kennlinie auf.

Die Simulationseinrichtung zur Einstellung und Ausgabe des Vorgabewiderstands an den Heizungsregler kann eine Kaskade von Widerständen aufweisen, die jeweils parallel schaltbar sind, um den gewünschten simulierten Widerstandwert zu erzeugen. Das Schalten der einzelnen Widerstände in einer geeignete Parallelschaltung kann einfacherweise durch Relais und/oder CMOS-Schalter erfolgen. Grundsätzlich ist der Vorgabewiderstandswert natürlich auch in einer Serienschaltung von Widerständen erzeugbar, wobei die erfindungsgemäß vorgeschlagene Parallelschaltung jedoch schaltungstechnisch einige Vorteile bezüglich der erreichbaren Widerstandswerte und dem verbundenen Schaltungsaufwand bietet.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/ oder bildlich dargestellten Merkmale für sich oder in beliebiger Kombination den Gegenstand der vorliegenden Erfindung, auch unabhängig von deren Zusammenfassung in den Ansprüchen oder deren Rückbezüge.

Es zeigen:

Fig. 1    schematisch den Aufbau einer erfindungsgemäßen Vorrichtung zur Beeinflussung einer Temperaturmessgröße und das darin ablaufende Verfahren;

Fig. 2    eine Anpassung der Schätzfunktion an zwei Messwertpaare;

Fig. 3    eine Anpassung der Schätzfunktion an drei Messwertpaare;

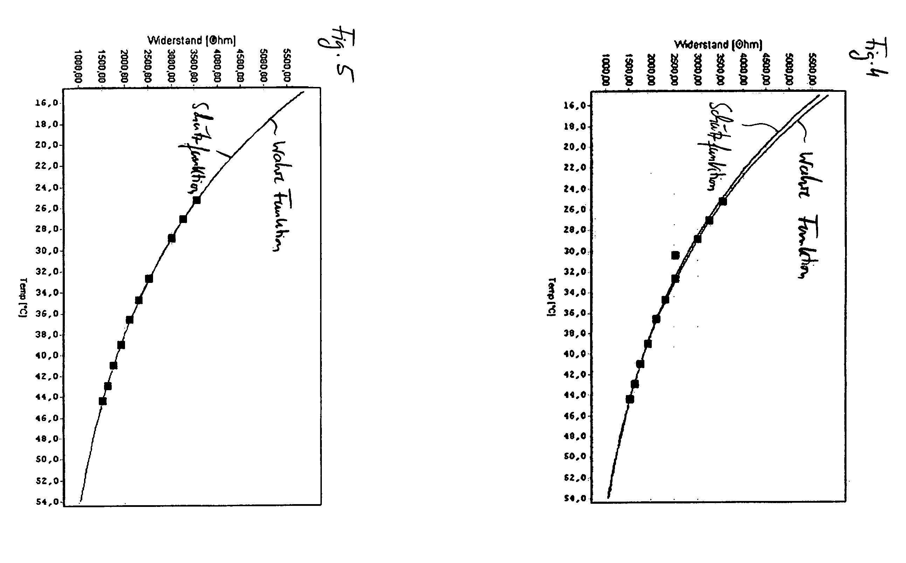

Fig. 4    eine Anpassung der Schätzfunktion an mehrere Messwertpaare, von denen einige Ausreißer beziehungsweise Fehlmessungen darstellen und

Fig. 5    eine Anpassung der Schätzfunktion an eine Vielzahl von Messwertpaaren, bei der Ausreißer gemäß Fig. 4 eliminiert wurde.

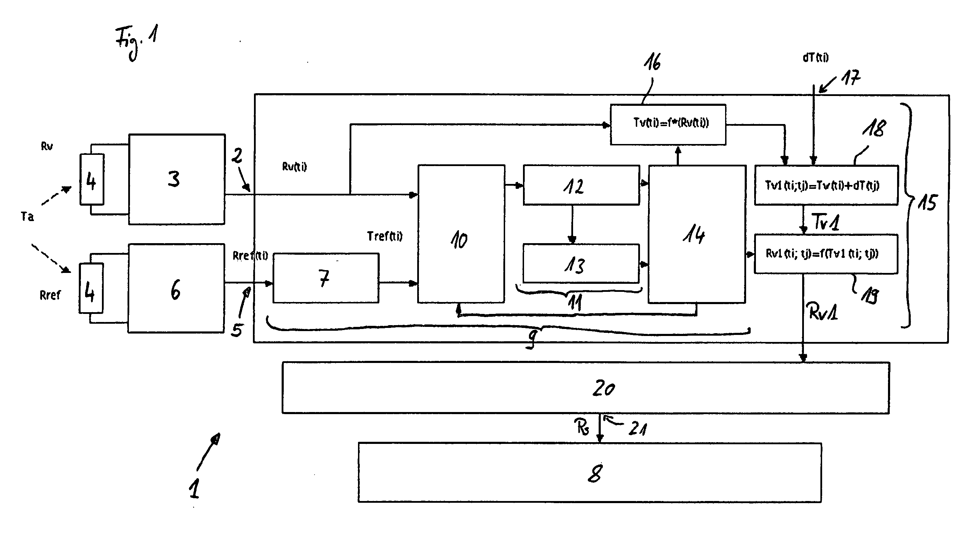

In Fig. 1 ist die erfindungsgemäße Vorrichtung 1 zur Beeinflussung einer Temperaturmessgröße schematisch dargestellt. Diese weist einen Messanschluss 2 zum Anschließen eines Vorlauftemperatursensors 3 mit einem Widerstandstemperatursensor 4 auf, der einen der aktuellen Temperatur entsprechenden Widerstandswert ausgibt, wobei der zu einem Zeitpunkt gemessene Widerstandswert Rv der Vorrichtung 1 über den Messanschluss 2 zugeleitet wird.

Zusätzlich zu dem Messanschluss 2 ist in der Vorrichtung 1 ein Referenzanschluss 5 vorgesehen, an den ein ebenfalls einen Widerstandstemperatursensor 4 aufweisender Referenzsensor 6 angeschlossen wird, dessen vorzugsweise zum selben Zeitpunkt gemessener Referenzwiderstandswert Rref der Vorrichtung 1 über den Referenzanschluss 5 zugeleitet wird. Im Gegensatz zu dem Vorlauftemperatursensor 3 ist die Widerstands-Temperatur-Kennlinie des Referenzsensors 6 bekannt und in einer Einrichtung 7 zur Ermittlung der Referenztemperatur hinterlegt. Diese bestimmt aus dem mit dem Referenztemperatursensor 6 gemessenen Referenzwiderstandwert Rref die Messtemperatur Ta in der Umgebung des Referenztemperatursensors 6 als Referenztemperatur Tref. Der Referenztemperatursensor 6 kann dabei Teil der Vorrichtung 1 sein.

Vorzugsweise sind die Widerstandstemperatursensoren 4 des Vorlauftemperatursensors 3 und des Referenztemperatursensors 6 derart angeordnet, dass sie dieselbe Messtemperatur Ta erfassen. Dies gilt zumindest für den nachfolgend ausführlich beschriebenen Fall, dass der Sensor 3 ein Vorlauftemperatursensor ist, dessen gemessener Widerstandswert Rv ohne Anwendung des erfindungsgemäßen Verfahrens beziehungsweise Zwischenschaltung der erfindungsgemäßen Vorrichtung 1 unmittelbar einem Heizungsregler 7 zugeleitet würde, damit dieser auf Grundlage des gemessenen Widerstandswerts Rv die Vorlauftemperatur der Heizungsanlage vorgibt.

In einer alternativen, nicht dargestellten Ausführungsform der Erfindung kann der Sensor 3 auch ein Außentemperatursensor sein, dessen Widerstandswert üblicherweise dem Heizungsregler zugeführt wird. In diesem Fall erfasst der Referenztemperatursensor 6 dennoch vorzugsweise die Vorlauftemperatur der Heizungsanlage, da durch das erfindungsgemäße Verfahren eine Möglichkeit vorgeschlagen wird, einem Heizungsregler eine Änderung der Vorlauftemperatur vorzugeben. Die ermittelte Referenztemperatur Tref entspricht Vorlauftemperatur der Heizungsanlage, die in dieser Ausführungsform unmittelbar mit dem gemessenen Widerstandswert RV des Außentemperatursensors korreliert würde.

Eine weitere, nicht dargestellte Ausführungsform sieht vor, dass der Referenztemperatursensor 6 die Außentemperatur misst. Über die bekannte Widerstands-Temperatur-Kennlinie des Referenztemperatursensors 6 kann dann die Außentemperatur ermittelt werden. Die eigentlich interessierende Größe, nämlich die aktuelle Vorlauftemperatur der Heizungsanlage, lässt sich dann aus einer bekannten oder vermuteten bzw. angenommenen Heizungskennlinie des Heizungsreglers 8 ermitteln. Dies gilt zumindest unter der Annahme, dass der Heizungsregler 8 im Sinne einer Steuerung genau die der Außentemperatur entsprechende Vorlauftemperatur auch tatsächlich einstellt bzw. mögliche Abweichungen, bspw. weil sie vorgegeben wurden, bekannt sind. In jedem Fall kann also die ermittelte Referenztemperatur Tref mit der Vorlauftemperatur korreliert werden.

Der weitere Ablauf des erfindungsgemäßen Verfahrens ist in den vorbeschriebenen Anwendungsfällen vergleichbar.

Der durch den Vorlauftemperatursensor 3 (beziehungsweise den Außentemperatursensor) gemessenen Widerstandswert Rv und die aufgrund einer Messung des Referenztemperatursensors 6 ermittelte Referenztemperatur Tref, die vorzugsweise jeweils beide zu demselben Zeitpunkt bestimmt wurden, werden einer Kennlinieneinrichtung 9 zugeführt und dort in einem Speicher 10 zur Messwertablage hinterlegt, wobei die Einrichtung 7 zur Ermittlung der Referenztemperatur auch Teil der Kennlinieneinrichtung 9 sein kann.

Die Messungen des Vorlauftemperatursensors 3 und des Referenztemperatursensors 6 werden zu verschiedenen Zeitpunkten wiederholt, so dass im Laufe der Zeit in dem Speicher 10 zur Messwertablage mehrere Messwertpaare abgespeichert werden, die jeweils die Referenztemperatur Tref und den gemessenen Widerstandswert Rv enthalten. In einem Rechenwerk 11 zur Kennlinienbestimmung, welches Zugriff auf den Speicher 10 zur Messwertablage hat, werden dem Rechenwerk 11 zur Kennlinienbestimmung vorgegebene Schätzfunktionen angepasst. Dazu werden die Parameter der vorgegebenen Schätzfunktionen beispielsweise in einem sogenannten mathematischen "Fit"-Verfahren (Anpassung) ermittelt, so dass die Schätzfunktionen mit den ermittelten Parametern die vorhandenen Messwertpaare möglichst optimal beschreiben. Da der Typ und die Kennlinie des Vorlauftemperatursensors 3 nicht bekannt sein müssen, sind in der Kennlinieneinrichtung 11 verschiedene typische Kennlinien als Schätzfunktionen hinterlegt, wobei in einem Kennlinienberechnungsmodul 12 der Kennlinieneinrichtung 11 jeweils eine Anpassung für jede der hinterlegten Kennlinienform durchgeführt werden kann.

Anschließend wird in einem Auswahlmodul 13 der Kennlinieneinrichtung 11 diejenige Schätzfunktion ausgewählt, deren Anpassung die Messwertpaare am besten beschreibt. Hierzu wird in später noch genauer beschriebener Weise die Güte der Anpassung herangezogen.

Nach Auswahl der geeigneten Kennlinie werden deren Parameter in einem der Kennlinieneinrichtung 9 angeschlossenen Speicher 14 zur Parameterablage hinterlegt, auf den weitere Recheneinheiten der erfindungsgemäßen Vorrichtung 1 Zugriff haben.

In der Vorrichtung 1 ist ferner eine Vorgabeeinrichtung 15 zur Ermittlung eines Vorgabewiderstandswertes Rv1 vorgesehen, in der analog zu der Einrichtung 7 der Ermittlung der Referenztemperatur ein Rechenwerk 16 zur Berechnung der Temperatur Tv aus dem gemessenen Widerstandswert Rv unter Verwendung der ermittelten Kennlinie vorgesehen, die durch Zugriff auf die in den Speicher 14 abgelegten Parameter erfolgt. Anstelle dieser Berechnung könnte auch unmittelbar auf die Referenztemperatur Tref zurückgegriffen werden, um die aktuell ermittelte Temperatur Tv zu bestimmen.

Ferner ist der Vorgabeeinrichtung 15 ein Korrekturanschluss 17 zugeordnet, über den die Vorrichtung 11 einen Korrekturtemperaturwert dT erhält. Dieser kann beispielsweise in einer der eigentlichen Heizungsregelung 8 vorgelagerten Wärmeadaptionsregelung ermittelt worden sein. Der aus dem gemessenen Widerstandswert Rv ermittelte Temperaturwert Tv und der die gewünschte Änderung der Vorlauftemperatur anzeigende Korrekturtemperaturwert dT werden in einem Additionsmodul 18 zu einem Vorgabetemperaturwert Tv1 addiert, der in einem Rechenwerk 19 in einen dem Vorgabetemperaturwert Tv1 entsprechenden Vorgabewiderstandswert Rv1 umgerechnet wird. Dies erfolgt ebenfalls unter Verwendung der zuvor in der Kennlinieneinrichtung 9 ermittelten Kennlinie des Vorlauftemperatursensors 3.

Der Vorgabewiderstandswert Rv1 stellt somit den Wert dar, der dem Heizungsregler 8 zugeführt werden muss, damit dieser die um den Korrekturtemperaturwert dT korrigierte Vorlauftemperatur in der Heizungsanlage einstellt. Dazu wird der in dem Rechenwerk 19 ermittelte Vorgabewiderstandswert Rv1 einem Widerstandssimulator 20 zugeleitet, der diesen Widerstand Rs simuliert und über den Ausgabeanschluss 21 der erfindungsgemäßen Vorrichtung an den Heizungsregler 8 ausgibt.

Zusammenfassend wird durch die erfindungsgemäße Vorrichtung 1 also zyklisch eine auf den Vorlauftemperatursensor 3 applizierte Messtemperatur Ta als gemessener Widerstandswert Rv empfangen. Gleichzeitig wird die Messtemperatur Ta durch einen der Vorrichtung 1 zugehörigen Referenztemperatursensor 6 gemessen und als Referenztemperatur Tref bestimmt. Aus den zyklischen Messungen dieser Messwertpaare Rv, Tref wird die a priori unbekannte Kennlinie des Vorlauftemperatursensors 3 bestimmt. Ferner wird der Vorrichtung 1 ein Korrekturtemperaturwert dT vorgegeben, der (vorzeichenbehaftet) zu der ermittelten Temperatur Tv addiert wird, um einen Vorgabekorrekturwert Tv1 zu erzeugen, der anschließend in einen Vorgabewiderstandswert Rv1 umgerechnet und als simulierter Widerstandswert Rs an dem Heizungsregler 8 ausgegeben wird. Auf diese Weise ist es ohne Kenntnis der Kennlinie des Vorlauftemperatursensors 3 möglich, einem Heizungsregler 8 ohne speziellen Korrekturanschluss auf genaue Art und Weise einen Korrekturtemperaturwert dT für eine Änderung der Vorlauftemperatur aufzuprägen.

Das in der vorbeschriebenen Vorrichtung ablaufende erfindungsgemäße Verfahren wird nachfolgend noch einmal im Detail beschrieben.

Ziel des erfindungsgemäßen Verfahrens ist es, einem Heizungsregler 8 einen auch als Vorgabewiderstandswert Rv1 bezeichneten Widerstandswert über einen vorhandenen Sensoranschluss einzuspeisen, der neben dem gemessenen Widerstandswert Rv des im Normalfall unmittelbar an den Heizungsregler 8 angeschlossenen Vorlauftemperatursensors 3 auch einen von außen vorgegebenen Korrekturtemperaturwert dT für die Vorlauftemperatur berücksichtigt. Der Heizungsregler 8 stellt dann eine der Summe des gemessenen Widerstandswerts Rv und des Korrekturtemperaturwerts dT entsprechende Vorlauftemperatur in der Heizungsanlage ein. Dies soll ohne explizite Kenntnis der Kennlinie des Widerstandstemperatursensors 4 des Vorlauftemperatursensors 3 und universell für verschiedene Sensortypen oder Schaltungsanordnungen möglich sein. Insbesondere soll das vorgeschlagene Verfahren auch unmittelbar anwendbar sein, wenn anstelle des Vorlauftemperatursensors ein Außentemperatursensor an den Heizungsregler 8 angeschlossen ist.

Daher wird in einem ersten Verfahrensschritt die unbekannte Kennlinie des Vorlauftemperatursensors 3 durch Messung von generell fehlerbehafteten Messtemperaturen Ta ermittelt werden, die zur Ausgabe eines gemessenen Widerstandswerts Rv zu einem Zeitpunkt ti führt. Über einen Referenztemperatursensor 6 wird die der Messtemperatur Ta entsprechende Referenztemperatur Tref ermittelt, wobei der gemessene Widerstandswert Rv und die Referenztemperatur Tref ein Messwertpaar bilden. Aus mehreren, zu verschiedenen Zeitpunkten ermittelten Messwertpaaren kann dann eine Kennlinie f ermittelt werden, so dass die Beziehungen Rv = f (Tref) beziehungsweise Tref = f* (Rv) gelten, wobei die Funktion f die Kennlinie und die Funktion f* die inverse Kennlinie beschreiben.

Aus dem zu einem Zeitpunkt ti aktuell gemessenen Widerstandswert Rv(ti) lässt sich dann mit Hilfe der Kennlinie f* die aktuell ermittelte Temperatur Tv(ti) bestimmen. Anschließend soll unter Vorgabe eines als Temperaturdifferenz zum Zeitpunkt tj vorgegebenen Korrekturtemperaturwerts dT ein Vorgabewiderstandswert Rv1 mit Hilfe der angenäherten Kennlinie f berechnet werden, den der Temperatursensor 3 bei Applikation der um den Korrekturwert dT veränderten Messtemperatur einnehmen würde, d.h. Rv1(ti, tj) = f (Ta(ti) +dT(tj)). Der neu berechnete Widerstandswert Rv1 wird dann so ausgegeben, dass der Heizungsregler 8 die Ausgabe in gleicher Weise verarbeiten kann als wenn der Vorlauftemperatursensor 3 direkt aufgeschaltet wäre.

Konkret läuft das Verfahren wie folgt ab. Zyklisch werden zu Zeitpunkten ti von dem Vorlauftemperatursensor 3 der aktuell gemessene Widerstandswert Rv und von dem Referenztemperatursensor der diesem Referenzwiderstand Rref gemessen, wobei sich der Referenztemperatursensor 6 vorzugsweise in unmittelbarer räumlicher Nähe zu dem Vorlauftemperatursensor 3 befindet.

Unter Berücksichtigung der bekannten Kennlinie des Referenztemperatursensors 6, die in der Einrichtung 7 zur Ermittlung der Referenztemperatur Tref hinterlegt ist, wird der gemessene Referenzwiderstandswert Rref in eine Referenztemperatur Tref (Referenztemperaturwert) umgerechnet. Der zu dem selben Zeitpunkt gemessene Widerstandswert Rv des Vorlauftemperatursensors 3 mit unbekannter Kennlinie wird der Referenztemperatur Tref zugeordnet, so dass diese beiden Werte ein Messwertpaar (Rv, Tref) bilden, das in einem Speicher 10 zur Messwertablage abgelegt wird. Diese Messwertablage ist in dem für die Applikation benötigten Temperaturbereich von etwa 20°C bis 110°C für die Vorlauftemperatur der Heizungsanlage in bspw. zwei Grad Kelvin große Temperaturintervalle $INT_n$ unterteilt, wobei die Wertepaare jeweils diesen Intervallen zugeordnet werden. Auch kleine oder größere Intervalle können erfindungsgemäß verwendet werden, auch wenn die Intervallgröße zwischen einem und drei Grad Kelvin einen ausgewogenen Ausgleich zwischen Datenmenge und Genauigkeit erreicht.

Bis zu dem Erreichen einer Mindestanzahl von Wertepaaren und der Bildung einer Schätzfunktion werden die Wertepaare (Rv, Tref) unmittelbar in dem Speicher 10 zur Messwertablage gespeichert. Ein schon vorhandenes Wertepaar in einem Temperaturintervall $INT_n$ wird dabei von einem neuen Wertepaar ersetzt. Ggf. wird vor dem Speichern der Wertepaare zuvor noch eine später im Detail beschriebene Verschmelzung durchgeführt.

Nach dem Erreichen der Mindestzahl von in dem Speicher 10 zur Messwertablage hinterlegten Wertepaaren (Rv, Tref) wird mit der Berechnung der verschiednen Schätzfunktionen f begonnen, wobei für die erste Berechnung mit zwei Wertepaaren in jedem Fall eine lineare Regression durchgeführt wird. Für die Sensorfunktion eines sogenannten NTC-Widerstands wird eine Schätzfunktion f der Form f = R(ti) = A * EXP( B*(1/273 - 1/(273+ti)) analog der Arrhenius-Gleichung verwendet. In diesem Fall sind die zu bestimmenden Parameter beziehungsweise Koeffizienten A und B. Als weitere Schätzfunktion wird ein Polynom zweiten Grades in der Funktion f = R(ti) = R0 + A (ti - t0) + b (ti - t0)$^2$ verwendet, welches die Kennlinie eines sogenannten PTC-Widerstands beschreibt. Die zu bestimmenden Parameter beziehungsweise Koeffizienten sind R0, A und B. Ggf. können auch weitere Schätzfunktionen angewendet werden.

Aus der Anzahl der für die Schätzfunktion zu bestimmenden Parametern ergibt sich, dass die an die Arrhenius-Gleichung angelehnte Exponentialfunktion grundsätzlich mit zwei und die als Polynom zweiten Grades ausgebildete Schätzfunktion mit drei Messwertpaaren bestimmt werden kann. Bei Extrapolationen auf einen Wertebereich der Schätzfunktion, in dem sich keine durch die Messwertpaare gebildeten Stützstellen befinden, liefert bei zwei und gegebenenfalls drei Messwertpaaren jedoch eine einfache lineare Regression in der Regel genauere Ergebnisse. Sinnvoller Weise kann die lineare Regression auch bis zu dem Vorhandensein von etwa zehn Messwertpaaren angewendet werden.

Zur Ermittlung der Schätzfunktionen wird eine Anpassung (Fit) nach dem sogenannten "Least-Square-Ansatz" (Summe der kleinsten Fehlerquadrate) verwendet. Zur Beurteilung der Güte der Anpassungen beziehungsweise Schätzfunktionen wird der mittlere quadratische Gesamtfehler der Temperatur-Messwerte zur ermittelten Schätzfunktion berechnet:

$$Fehler = \frac{100}{n} \cdot \sqrt{\sum_i \left( \frac{f^*(Rv_i) - Tref_i}{Tref_i} \right)^2}$$

Dazu werden die Temperaturmesswerte $Tref_i$ zunächst von den Funktionswerten der ermittelten rekursiven Anpassungsfunktion $Tv_i = f^*(Rv_i)$ an der Stelle $Rv_i$ subtrahiert und die prozentuale Abweichung quadratisch addiert. Der mittlere Fehler in Prozent ergibt sich dann durch Wurzelziehen und Division durch die Anzahl der Messwertpaare n multipliziert mit 100.

Alternativ kann auch der Widerstandsfehler zur Beurteilung der Schätzfunktion herangezogen werden. Dies kann jedoch zu einer Übergewichtung des Widerstandsfehlers bei einer e-Funktion führen. In einem solchen Fall würde der quadratische Gesamtfehler nach der Gleichung

$$Fehler = \frac{100}{n} \cdot \sqrt{\sum_i \left( \frac{f(Tref_i) - Rv_i}{Rv_i} \right)^2}$$

berechnet

Nach dieser Güteberechnung in dem Auswahlmodul 13 wird diejenige Schätzfunktion mit dem kleinsten quadratischen Fehler ausgewählt. Deren Parameter beziehungsweise Koeffizienten werden in dem Speicher 14 zur Parameterablage gespeichert. Natürlich können auch andere gängige Methoden zur Beurteilung der Güte der Anpassung verwendet werden.

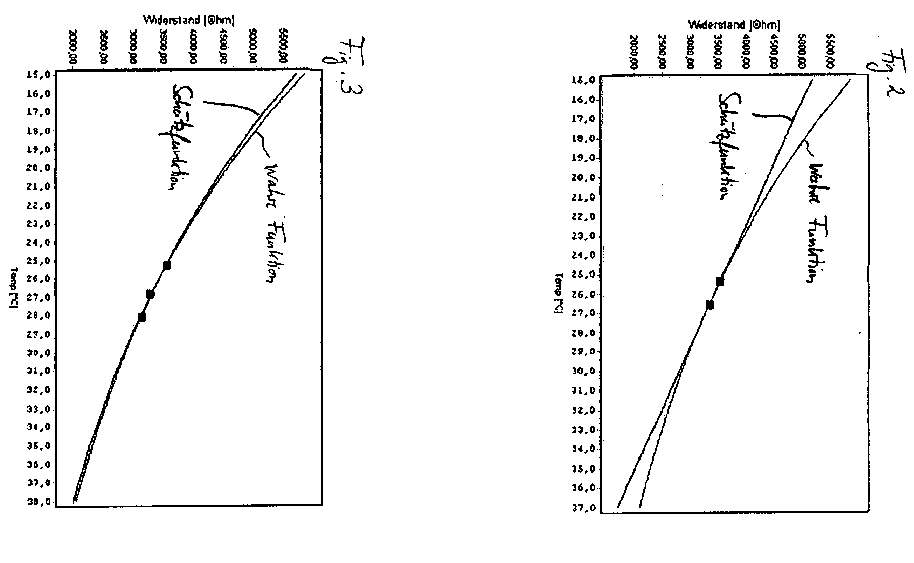

Fig. 2 zeigt eine Anpassung der Arrhenius-Funtkion auf der Basis von zwei Messwertpaaren mit der Schätzfunktion und der wahren Kennlinie. Wie Fig. 2 zu entnehmen ist, ist der Fehler bei größerer Extrapolation durch die Schätzfunktion noch vergleichsweise groß. Daher wird trotz einer Berechnung aller Schätzfunktionen bei einer Anpassung mit zwei Messwerten erfindungsgemäß zunächst die lineare Regression als Schätzfunktion angewendet, die bei einer Extrapolation in der Regel bessere Schätzwerte liefert.

Fig. 3 zeigt eine Anpassung nach der Least-Square-Methode bei drei Messwertpaaren, die bereits eine sehr genaue Übereinstimmung der Schätzfunktion und der wahren Kennlinie zeigt.

Ferner ist in der Kennlinieneinrichtung 9 ein Dynamikfilter implementiert, der die Einflüsse einer unterschiedlich guten Wärmekopplung des Vorlauf- oder Außentemperatursensors 3 und des Referenztemperatursensors 6 an die Messstelle vermindern soll. Dazu lässt der in der Zeichnung nicht dargestellte Dynamikfilter nur Wertepaare zu, wenn keine oder nur eine geringe Temperaturdynamik in dem System festgestellt wird, d.h. sich ein stabiler Temperaturzustand eingestellt hat.

Dazu werden die Widerstandswerte Rref und die Temperaturwerte Tref des in der Regel thermisch gut angekoppelten Referenztemperatursensors 6 in einen Ringpuffer eingetragen, wobei bei dem Eintrag eines neuen Wertes der jeweils älteste Wert aus dem Ringpuffer entfernt wird. Die Größe des Ringpuffers, d.h. die Anzahl der Einträge, ist parametrierbar.

Bei jedem neuen Eintrag wird ein Mittelwert über alle Einträge der beiden Ringpuffer für die Widerstandswerte Rref und die Temperaturwerte Tref gebildet. Diese Mittelwerte werden jeweils in einen zweiten, kleineren Mittelwert-Ringpuffer mit bspw. je fünf Einträgen eingetragen. Vorzugsweise ist die Anzahl der Einträge ungerade.

Als Arbeitspunkt wird nun der mittlere Eintrag eines Mittelwert-Ringpuffers ausgewählt. Durch Differenzbildung jeweils der beiden Werte links und rechts des Arbeitspunktes wird die Steigung links und rechts des Arbeitspunktes bestimmt und zu einer (mittleren) Steigung bspw. durch Mittelwertbildung zusammengefasst. Die Krümmung ergibt sich durch Differenzbildung der beiden Steigungen links und rechts des Arbeitspunktes.

Die so für die Widerstandswerte Rref und die Temperaturwerte Tref ermittelten (mittlere) Steigung und Krümmung können ihrerseits als Wertehistorie in einem weiteren Ringpuffer abgelegt werden.

Wenn nun sämtliche Werte für Steigung und Krümmung der verschiedenen Wertehistorien unterhalb von vorgegebenen Grenzwerten für die Steigung und Krümmung bleiben, kann von einer ruhigen Umgebung des System im Bereich um den Arbeitspunkt ausgegangen werden, bei der es keine Phasenverschiebung zwischen den Einzelwerten eines Wertepaares gibt. Das Wertepaar kann daher verwendet werden.

Um die Anzahl der in dem Speicher 10 zu hinterlegenden Messwertpaare zu reduzieren, werden bestehende Messwertpaare (Rv, Tref) in dem Temperaturintervall $INT_n$ mit einem aktuellen Messwertpaar ($Rv_{akt}$ und $Tref_{akt}$), ggf. unter Verwendung einer bereits bekannten Schätzfunktion f, zu einem neuen Intervalleintrag $(Rv, Tref)_n$ für das Intervall $INT_n$ verschmolzen. Durch diese Mittlung streuen die Widerstandswerte $Rv_n$ des Temperaturintervalls $INT_n$ im Laufe der Zeit weniger, so dass die Schätzfunktion insgesamt verbessert wird.

Möglichkeiten für den Ablauf der Verschmelzung werden nachfolgend beschrieben. Die Erfindung ist jedoch nicht auf die nachfolgenden Verschmelzung begrenzt.

In einer einfachen Ausführung kann die Verschmelzung durch eine gewichtete Verbindung der alten Einträge des Messwertpaares mit den aktuellen Einträgen des Messwertpaares verbunden werden:

$$\text{Tref(neu)} := \text{Tref(alt)} + 0.2\ (\text{Tref}_{akt} - \text{Tref(alt)}) = 0.2\ \text{Tref}_{akt} + 0.8\ \text{Tref(alt)}$$

$$\text{Rv(neu)} := \text{Rv(alt)} + 0.2\ (\text{Rv}_{akt} - \text{Rv(alt)}) = 0.2\ \text{Rv}_{akt} + 0.8\ \text{Rv(alt)}$$

Damit wird ein Altwert mit 80% gegenüber einem neueren Wert gewichtet.

Alternativ kann auch das folgende Verschmelzungsverfahren durchgeführt werden:

1. Zunächst wird überprüft, ob in dem Temperaturintervall $INT_n$ bereits ein Messwertpaar $(Rv, Tref)_n$ vorhanden ist. Solange dies nicht der Fall ist, wird das aktuelle Messwertpaar für dieses Intervall $INT_n$ gespeichert. Andernfalls wird eine Verschmelzung durchgeführt.

2. Dazu wird zunächst der Funktionswert der aktuell gültigen Schätzfunktion $Rv^{alt} = f^*(Tref)$ mit dem Wert Tref des gespeicherten (alten) Messwertpaares als berechnet.

3. Anschließend wird der Funktionswert der aktuell gültigen Schätzfunktion $Rv^{neu} = f^*(Tref_{akt})$ mit dem Wert $Tref_{akt}$ des aktuellen (neuen) Messwertpaares berechnet.

4. Anschließend wird der relative Widerstandsfehler des alten Intervalleintrags $Rv_n$ zur aktuellen Schätzfunktion berechnet als $dRv^{alt} = (Rv_n - Rv^{alt})/Rv^{alt}$. Analog wird der relative Widerstandsfehler $dRv^{neu}$ des neuen/aktuellen Intervalleintrags $Rv_{akt}$ zur Schätzfunktion als $dRv^{neu} = (Rv_{akt} - Rv^{neu})/Rv^{neu}$ bestimmt.

5. Die Berechnung des neuen Widerstandsintervalleintrags $Rv_n$ (neu) wird dann mit der Gewichtung 80% Altwert und 20% Neuwert gemäß der nachfolgenden Formel vorgenommen $Rv_n$ (neu) := $Rv^{neu}\ (1+dRv^{alt}*0.8+dRv^{neu}*.2)$.

Diese Formel erklärt sich dadurch, dass der Fehler gerade die relative Abweichung des Widerstandswerts des Messeintrages von der Schätzfunktion angibt.

Der neue Temperaturwert $Tref_n$ des Messwertpaares wird durch den aktuellen Temperatur $Tref_{akt}$ gebildet.

Um die Konvergenz der Anpassung nicht durch Ausreißer in der Messwertreihe zu beeinflussen, die auf offensichtlicher Falschmessung beruhen, werden Wertepaare (Rv, Tref), die nicht zu der gefundenen und ausgewählten Schätzfunktion f passen, eliminiert, indem die Einzelfehler der Wertepaare zu der Schätzfunktion bestimmt und mit einem festgelegten Grenzwert verglichen werden. Treten mehrere Ausreißer in Folge auf, werden alle Wertepaare (Rv, Tref) verworfen und die Kennlinienermittlung wird völlig neu gestartet. Dies ist beispielsweise dann zu erwarten, wenn ein Temperatursensor bei einer Wartung ersetzt wurde.

Damit Ausreißer als solche eindeutig zu identifizieren sind, muss die Schätzfunktion mit einer ausreichenden Güte, d.h. einem ausreichend kleinen Fehler, bestimmt worden sein. Dazu sind in der Regel mindestens etwa 10 Messwertpaare notwendig.

Der Ablauf der Elimination von Ausreißern geschieht dabei wie folgt:

1. Die größten Fehler eines Einzelwiderstandswertes zu der Schätzfunktion werden ermittelt und der Intervallindex wird gemerkt.

2. Wenn der größte Fehler größer als ein Grenzwert, beispielsweise 2%, ist, wird dieser Intervalleintrag gelöscht. Danach werden die Parameter beziehungsweise der Koeffizienten wie vorbeschrieben mit den verbliebenen Intervalleinträgen beziehungsweise Messwertpaaren neu berechnet.

3. Sofern mehrmals hintereinander, beispielsweise dreimal in Folge, die unter der vorstehenden Ziffer 2 definierte Bedingung auftritt, werden alle Messwertpaare beziehungsweise Intervalleinträge gelöscht, weil dies darauf hindeutet, dass die Schätzfunktion nicht mehr zu dem Temperatursensor passt. Dies kann beispielsweise dann auftreten, wenn bei einer Wartung der Temperatursensor erneuert wurde.

Unter Berücksichtigung der zuvor erläuterten Bestimmung der Schätzfunktionen f als Kennlinie wird aus dem aktuellen Messwert Rv in dem Rechenwerk 16 zur Berechnung der Temperatur die aktuelle Temperatur Tv (ermittelte Temperatur) des Vorlauftemperatursensors 3 bestimmt, die in etwa mit der Referenztemperatur Tref übereinstimmen sollte, so dass anstelle der Berechnung auch unmittelbar die Referenztemperatur Tref verwendet werden könnte. Die Berechnung erfolgt mit der inversen Schätzfunktion f* nach folgender Vorschrift $Tv = f^*(Rv)$. Die so ermittelte Temperatur Tv wird mit dem von außen über den Korrekturanschluss 17 eingespeisten Korrekturtemperaturwert dT beispielsweise durch Addition in einen Vorgabekorrekturwert Tv1 umgerechnet, der anschließend unter Anwendung der Schätzfunktion f in einem Vorgabewiderstandswert Rv1 umgerechnet wird. Dies erfolgt mit der Vorschrift $Rv1 = f(Tv1) = f(Tv+dT)$.

Der Vorgabewiderstandswert Rv1 wird an einen Widerstandssimulator 20 ausgegeben, der beispielsweise eine Kaskade von Widerständen aufweist, die mit Relais und CMOS-Schaltern parallel geschaltet den Vorgabewiderstandswert Rv1 als simulierten Widerstand Rs erzeugen kann. Dieser simulierte Widerstand Rs wird anschließend an den Heizungsregler 8 übertragen.

Die Messung des Widerstandswerts Rv und des Referenzwiderstandswerts Rref erfolgt in möglichst kurzen Zeitabständen nacheinander. Insgesamt werden die Messungen zyklisch durchgeführt, wobei der zeitliche Abstand der Ausgabe der simulierten Widerstände Rs an den Heizungsregler 8 entsprechend dessen Anforderungen einstellbar ist.

Mit der vorliegenden Erfindung ist es möglich, eine unbekannte Kennlinie eines Widerstandstemperatursensors 4, die bei einem NTC-Widerstand exponentiell und bei einem PTC-Widerstand quadratisch verläuft, durch Messung von wenigen Temperatur- und Widerstandsmesswertepaaren zu ermitteln und anzunähern, wobei durch die erfindungsgemäße Auswahl verschiedener Schätzfunktionen und Bestimmung der besten Anpassung sehr schnell eine optimale Kennlinie ermittelt wird. So kann bereits kurz nach Inbetriebnahme der erfindungsgemäßen Vorrichtung Einfluss auf die Führungsgröße des Heizungsreglers 8 genommen werden.

Besonders vorteilhaft an dem erfindungsgemäß vorgeschlagenen Verfahren ist, dass eine Aussage über die Qualität der ermittelten Kennlinie möglich ist und fehlerhafte Messwertpaare erkannt und eliminiert werden. Ferner passt sich die ermittelte Schätzfunktion f (Kennlinie) dynamisch an eine sich ändernde Widerstands-Temperaturkennlinie des Widerstands über die Lebensdauer des Sensors an und adaptiert sich selbsttätig bei einem Austausch des Sensors. Nach Ermittlung der Kennlinie kann der Widerstandswert zu einer beliebigen Temperatur bestimmt werden. Auch die rekursive Darstellung (Bestimmung einer Temperatur bei gegebenem Widerstand) kann in dem Rechenwerk mit an sich bekannten mathematischen Umrechnungen erfolgen. Durch Anwendung des beschriebenen Schätzverfahrens und die Verschmelzung von Einzelwerten wird die Anzahl einzelner Messwertpaare begrenzt und gleichzeitig die historischen Informationen vorangegangener Messwerte erhalten. Ferner führt die als besonders bevorzugt vorgeschlagene Verschmelzung zu einem Mittlungseffekt, so dass der maximale Fehler der Schätzfunktion zur wahren Funktion beziehungsweise Kennlinie immer kleiner ist als der maximale Fehler der Einzelmesswerte zu der wahren Funktion beziehungsweise Kennlinie.

Damit eignen sich die erfindungsgemäß vorgeschlagene Vorrichtung 1 und das darin ablaufende Verfahren für Einsatzfälle, in denen einem Heizungsregler 8 als Führungsgröße eine Vorlauftemperatur oder Außentemperatur als Widerstandswert zugeführt wird und die durch den Heizungsregler erzeugte Vorlauftemperatur durch einen eine Änderung der Vorlauftemperatur angebenden Korrekturtemperaturwert beeinflusst werden soll.

**Bezugszeichenliste:**

1    Vorrichtung zur Beeinflussung einer Temperaturmessgröße
2    Messanschluss
3    Vorlauf- bzw. Außentemperatursensor
4    Widerstandstemperatursensor
5    Referenzanschluss
6    Referenztemperatursensor
7    Einrichtung zur Ermittlung der Referenztemperatur
8    Heizungsregler
9    Kennlinieneinrichtung
10   Speicher zur Messwertablage
11   Rechenwerk zur Kennlinienbestimmung
12   Kennlinienberechnungsmodul
13   Auswahlmodul
14   Speicher zur Parameterablage
15   Vorgabeeinrichtung zur Ermittlung eines Vorgabewiderstandswerts
16   Rechenwerk zur Berechnung der Temperatur
17   Korrekturanschluss
18   Additionsmodul
19   Rechenwerk zur Berechnung des Vorgabewiderstandswerts
20   Simulationseinrichtung, Widerstandssimulator
21   Ausgabeanschluss

Rv      gemessener Widerstandswert
Rref    gemessener Referenzwiderstandswert
Rv1     Vorgabewiderstandswert
Rs      simulierter Widerstandswert
Ta      Messtemperatur
Tref    Referenztemperaturwert
Tv      ermittelte Temperatur / Vorlauftemperaturwert
dT      Korrekturtemperaturwert, Änderung der Vorlauftemperatur
Tv1     Vorgabetemperaturwert
$INT_n$   Temperaturintervall
f       Schätzfunktion, Kennlinie

**Patentansprüche**

**1.**  Verfahren zur Beeinflussung einer Temperaturmessgröße an dem Eingang eines Heizungsreglers (8), bei dem

- ein der Vorlauftemperatur der Heizungsanlage entsprechender Widerstandswert (Rv) eines Vorlauf- oder Außentemperatursensors (3) mit unbekannter Kennlinie und ein der Vorlauftemperatur oder Außentemperatur der Heizungsanlage entsprechender Referenzwiderstandswert (Rref) eines Referenztemperatursensors (6) mit bekannter Kennlinie erfasst werden, wobei aus dem Widerstandswert des Referenztemperatursensors (Rref) ein Referenztemperaturwert (Tref) bestimmt und damit eine Kennlinie für den Vorlauf- oder Außentemperatursensor (3) ermittelt wird,
- aus dem Referenztemperaturwert (Tref) oder dem gemessenen Widerstandswert (Rv) und der ermittelten Kennlinie ein Vorlauftemperaturwert (Tv) ermittelt wird,
- ein Korrekturtemperaturwert (dT) erfasst wird,
- der Vorlauftemperaturwert (Tv) und der Korrekturtemperaturwert (dT) zu einem Vorgabetemperaturwert (Tv1) zusammengefasst werden,

- mittels der zuvor bestimmten Kennlinie ein dem Vorgabetemperaturwert (Tv1) entsprechender Vorgabewiderstandswert (Rv1) bestimmt, in einem Widerstandssimulator (20) eingestellt wird und als simulierter Widerstandswert (Rs) ausgegeben wird,

wobei zur Ermittlung der Kennlinie jeweils Messwertpaare aus dem Widerstandswert (Rv) des Vorlauf- oder Außentemperatursensors (3) und dem Referenztemperaturwert (Tref) des Referenztemperatursensors (6) ausgewertet werden, indem mindestens zwei Schätzfunktionen mit unterschiedlicher Kurvenform durch Parameterbestimmung an die Messwertpaare angepasst werden und die Güte der Anpassung zur Auswahl einer der Schätzfunktionen als Kennlinie herangezogen wird.

2. Verfahren nach Anspruch 1, **dadurch gekennzeichnet, dass** die Ermittlung der Kennlinie bei Inbetriebnahme für jede Kurvenform dann vorgenommen wird, wenn die jeweils minimale Anzahl der benötigten Messwertpaare vorliegt.

3. Verfahren nach Anspruch 1 oder 2, **dadurch gekennzeichnet, dass** die Ermittlung der Kennlinie wiederholt durchgeführt wird.

4. Verfahren nach Anspruch 3, **dadurch gekennzeichnet, dass** bei der Ermittlung der Kennlinie eine Schätzfunktion fest ausgewählt wird, wenn die Güte einer Schätzfunktion signifikant besser ist als die Güte der anderen Schätzfunktionen.

5. Verfahren nach einem der vorhergehenden Ansprüche, **dadurch gekennzeichnet, dass** nach Ermittlung eines oder mehrerer neuer Messwertpaare die Parameter der Schätzfunktion aktualisiert werden.

6. Verfahren nach einen der vorhergehenden Ansprüche, **dadurch gekennzeichnet, dass** ein neues Messwertpaar nur dann verwendet wird, wenn die Temperaturdynamik im System einen vorgegebenen Grenzwert nicht überschreitet.

7. Verfahren nach einem der vorhergehenden Ansprüche, **dadurch gekennzeichnet, dass** ein neues Messwertpaar mit bereits existierenden Messwertpaaren verschmolzen wird.

8. Verfahren nach Anspruch 7, **dadurch gekennzeichnet, dass** die Referenztemperaturwerte (Tref) vordefinierten Temperaturintervallen ($INT_n$) zugeordnet und nur einem Temperaturintervall ($INT_n$) zugeordnete Messwertpaare miteinander verschmolzen werden.

9. Verfahren nach Anspruch 7 oder 8, **dadurch gekennzeichnet, dass** die Widerstandswerte (Rv) unter Berücksichtigung der Schätzfunktion verschmolzen werden.

10. Verfahren nach einem der Ansprüche 7 bis 9, **dadurch gekennzeichnet, dass** die Verschmelzung eine Gewichtung vornimmt, wobei der neue Widerstandswert (Rv) und/oder der neue Referenztemperaturwert (Tref) mit geringerer Gewichtung eingeht als der bereits bestehende Widerstandswert (Rv) und/oder der neue Referenztemperaturwert (Tref).

11. Verfahren nach einem der vorhergehenden Ansprüche, **dadurch gekennzeichnet, dass** als Schätzfunktionen ein Polynom zweiten Grades, eine Exponentialfunktion, eine Gerade und/oder eine freie Funktion verwendet wird, die eine typische außentemperaturgeführte Heizungskennlinie mit einer Temperatur-Widerstands-Kennlinie verbindet.

12. Verfahren nach einem der vorhergehenden Ansprüche, **dadurch gekennzeichnet, dass** bei der Inbetriebnahme und/oder nach einem Löschen aller Messwertpaare eine Startfunktion als Schätzfunktion vorgegeben wird, bis eine bessere Schätzfunktion ermittelbar ist.

13. Verfahren nach einem der vorhergehenden Ansprüche, **dadurch gekennzeichnet, dass** Messwertpaare verworfen werden, die nicht zu der gefundenen Schätzfunktion passen.

14. Vorrichtung zur Beeinflussung einer Temperaturmessgröße an dem Eingang eines Heizungsreglers (8), wobei die Vorrichtung aufweist

- einen Messanschluss (2) zum Anschließen eines Vorlauf- oder Außentemperatursensors (3) einer Heizungsanlage, der einen der Vorlauftemperatur oder Außentemperatur entsprechenden Widerstandswert (Rv) ausgibt,

- einen an einen Referenzanschluss (5) angeschlossenen Referenztemperatursensor (6),
- einen Korrekturanschluss (17) zur Vorgabe eines Korrekturtemperaturwertes (dT),
- einen Ausgabeanschluss (21) zum Ausgeben eines simulierten Widerstandswerts (Rs) an den Heizungsregler (8),
- eine Kennlinieneinrichtung (9) zur Ermittlung der Kennlinie des Vorlauf- oder Außentemperatursensors (3),
- eine Vorgabeeinrichtung (15) zur Ermittlung eines Vorgabewiderstandswerts (Rv1) und
- eine Simulationseinrichtung (20) zur Simulation des auszugebenden Widerstandswerts (Rs) entsprechend dem Vorgabewiderstandswert (Rv1),

wobei die Kennlinieneinrichtung (9) dazu eingerichtet ist, mindestens zwei Schätzfunktionen mit unterschiedlicher Kurvenform durch Parameterbestimmung an die Messwertpaare anzupassen und die Kennlinie aufgrund der Güte der Anpassung der verschiedenen Schätzfunktionen auszuwählen.

15. Vorrichtung nach Anspruch 14, **dadurch gekennzeichnet, dass** die Kennlinieneinrichtung (9) eine Einrichtung (7) zur Ermittlung der Referenztemperatur (Tref), einen Speicher (10) zur Messwertablage, einen Speicher (14) zur Parameterablage und ein Rechenwerk (11) zur Kennlinienbestimmung aufweist.

16. Vorrichtung nach einem der Ansprüche 14 oder 15, **dadurch gekennzeichnet, dass** die Vorgabeeinrichtung (15) ein Rechenwerk (16) zur Ermittlung des Temperaturwerts (Tv) aus dem Widerstandswert (Rv) unter Verwendung der Kennlinie und ein Rechenwerk (19) zur Berechnung des Vorgabewiderstandswerts (Rv1) aus dem Vorgabetemperaturwert (Tv1) unter Verwendung der Kennlinie aufweist.

17. Vorrichtung nach einem der Ansprüche 14 bis 16, **dadurch gekennzeichnet, dass** die Simulationseinrichtung (20) eine Kaskade von Widerständen aufweist, die jeweils parallel schaltbar sind, um den gewünschten simulierten Widerstandswert (Rs) zu erzeugen.

**Claims**

1. A method for influencing a temperature measurement valuable at the inlet of a heating regulator (8), in which

   - a resistance value (Rv) of a flow temperature and outside temperature sensor (3) with unknown characteristic, which resistance value corresponds to the flow temperature of the heating system, and a reference resistance value (Rref) of a reference temperature sensor (6) with known characteristic, which reference resistance value corresponds to the flow temperature or outside temperature of the heating system, are recorded, wherein from the resistance value of the reference temperature sensor (Rref) a reference temperature value (Tref) is determined and therewith a characteristic for the flow temperature or outside temperature sensor (3) is defined,
   - from the reference temperature value (Tref) or the measured resistance value (Rv) and the determined characteristic, a flow temperature value (Tv) is determined,
   - a correction temperature value (dT) is recorded,
   - the flow temperature value (Tv) and the correction temperature value (dT) are combined in a specified temperature value (Tv1),
   - by means of the previously defined characteristic, a specified resistance value (Rv1) which corresponds to the specified temperature value (Tv1) is determined, is set in a resistance simulator (20), and is output as simulated resistance value (Rs),

   wherein for determining the characteristic, in each case measurement value pairs from the resistance value (Rv) of the flow temperature or outside temperature sensor (3) and the reference temperature value (Tref) of the reference temperature sensor (6) are evaluated by adapting at least two estimator functions with different curve forms through parameter determination to the measurement value pairs, and the quality of the adaptation is used for selecting one of the estimator functions as characteristic.

2. The method according to claim 1, **characterized in that** the determination of the characteristic at start of operation is carried out for each curve form when the respective minimum number of the necessary measurement values is available.

3. The method according to claim 1 or claim 2, **characterized in that** the determination of the characteristic is carried out repeatedly.

4. The method according to claim 3, **characterized in that** for determination of the characteristic an estimator function is definitely selected if the quality of an estimator function is significantly better than the quality of the other estimator functions.

5. The method according to any one of the preceding claims, **characterized in that** after determination of one or more new measurement value pairs, the parameters of the estimator function are updated.

6. The method according to any one of the preceding claims, **characterized in that** a new measurement value pair is used only if the temperature dynamics in the system does not exceed a specified limit value.

7. The method according to any one of the preceding claims, **characterized in that** a new measurement value pair is merged with already existing measurement value pairs.

8. The method according to claim 7, **characterized in that** the reference temperature values (Tref) are assigned to predefined temperature intervals ($INT_n$), and only measurement value pairs are merged with one another which are assigned to a temperature interval ($INT_n$).

9. The method according to claim 7 or claim 8, **characterized in that** the resistance values (Rv) are merged in consideration of the estimator function.

10. The method according to any one of the claims 7 to 9, **characterized in that** the merging performs a weighting, wherein the new resistance value (Rv) and/or the new reference temperature value (Tref) has a lower weighting than the already existing resistance value (Rv) and/or the new reference temperature value (Tref).

11. The method according to any one of the preceding claims, **characterized in that** as estimator function, a second degree polynomial, an exponential function, a straight line, and/or a free function is used which connects a typical outside temperature-controlled heating characteristic with a temperature-resistance characteristic.

12. The method according to any one of the preceding claims, **characterized in that** during start of operation and/or after deleting all measurement pairs, a start function is specified as estimator function until a better estimator function can be determined.

13. The method according to any one of the preceding claims, **characterized in that** the measurement pairs which do not fit in with the found estimator function are rejected.

14. A device for influencing a temperature measurement valuable at the inlet of a heating regulator (8), the device comprising

- a measuring connection (2) for connecting a flow temperature or outside temperature sensor (3) of a heating system, which measuring connection outputs a resistance value (Rv) which corresponds to the flow temperature or outside temperature,
- a reference temperature sensor (6) connected to a reference connection (5),
- a correction connection (17) for specifying a correction temperature value (dT),
- an output connection (21) for outputting a simulated resistance value (Rs) to the heating regulator (8),
- a characteristic device (9) for determining the characteristic of the flow temperature or outside temperature sensor (3),
- a specifying device (15) for determining a specified resistance value (Rv1), and
- a simulation device (20) for simulating the resistance value (Rs) to be output according to the specified resistance value (Rv1),

wherein the characteristic device (9) is equipped to adapt at least two estimator functions with different curve forms through parameter determination to the measurement value pairs and to select the characteristic based on the quality of the adaptation of the different estimator functions.

15. The device according to claim 14, **characterized in that** the characteristic device (9) comprises a device (7) for determining the reference temperature (Tref), a storage (10) for storing measurement values, a storage (14) for storing parameters, and an arithmetic unit (11) for determining the characteristic.

**16.** The device according to any one of the claims 14 or 15, **characterized in that** the specifying device (15) comprises an arithmetic unit (16) for determining the temperature value (Tv) from the resistance value (Rv) using the characteristic and an arithmetic unit (19) for calculating the specified resistance value (Rv1) from the specified temperature value (Tv1) using the characteristic.

**17.** The device according to any one of the claims 14 to 16, **characterized in that** the simulation device (20) has a cascade of resistors which each are connectable in parallel to generate the desired simulated resistance value (Rs).

**Revendications**

**1.** Procédé pour influencer une grandeur mesurée de température à l'entrée d'un régulateur de chauffage (8), dans lequel

- une valeur de résistance (Rv), correspondant à la température aller de l'installation de chauffage, d'un capteur de température aller ou d'un capteur de température extérieure (3) avec courbe caractéristique inconnue et une valeur de résistance de référence (Rref), correspondant à la température aller ou la température extérieure de l'installation de chauffage, d'un capteur de température de référence (6) avec courbe caractéristique connue sont enregistrées, une valeur de température de référence (Tref) étant déterminée à partir de la valeur de résistance du capteur de température de référence (Rref) et une courbe caractéristique pour le capteur de température aller ou de température extérieure (3) étant ainsi déterminées,
- une valeur de température aller (Tv) étant déterminée à partir de la valeur de température de résistance de référence (Tref) ou de la valeur de résistance (Rv) mesurée et de la courbe caractéristique déterminée,
- une valeur de température de correction (dT) est enregistrée,
- la valeur de température aller (Tv) et la valeur de température de correction (dT) étant regroupées pour former une valeur de température prédéfinie (Tv1),
- une valeur de résistance prédéfinie (Rv1) correspondant à la valeur de température prédéfinie (Tv1) étant déterminée au moyen de la courbe caractéristique déterminée auparavant, étant réglée dans un simulateur de résistance (20) et étant sortie comme valeur de résistance simulée (Rs),

chaque fois des paires de valeurs de mesure comprenant la valeur de résistance (Rv) du capteur de température aller ou du capteur de température extérieure (3) et la valeur de température de référence (Tref) du capteur de température de référence (6) étant analysées pour la détermination de la courbe caractéristique, au moins deux fonctions d'estimation avec une forme de courbe différente étant adaptées par détermination de paramètre aux paires de valeurs de mesure et la qualité de l'adaptation étant utilisée pour le choix de l'une des fonctions d'estimation comme courbe caractéristique.

**2.** Procédé selon la revendication 1, **caractérisé en ce que** la détermination de la courbe caractéristique est effectuée en cas de mise en service pour toute forme de courbe dans le cas où le nombre minimum respectif des paires de valeurs de mesure utilisées est présent.

**3.** Procédé selon la revendication 1 ou 2, **caractérisé en ce que** la détermination de la courbe caractéristique est effectuée de façon répétée.

**4.** Procédé selon la revendication 3, **caractérisé en ce que**, pour la détermination de la courbe caractéristique, la fonction d'estimation est choisie de façon fixe lorsque la qualité d'une fonction d'estimation est nettement meilleure que la qualité des autres fonctions d'estimation.

**5.** Procédé selon l'une quelconque des revendications précédentes, **caractérisé en ce que** les paramètres de la fonction d'estimation sont actualisés après la détermination d'une ou de plusieurs nouvelles paires de valeurs mesurées.

**6.** Procédé selon l'une quelconque des revendications précédentes, **caractérisé en ce qu'**une nouvelle paire de valeurs mesurées n'est utilisée que dans le cas où la dynamique de température ne dépasse pas une valeur limite prédéfinie.

**7.** Procédé selon l'une quelconque des revendications précédentes, **caractérisé en ce qu'**une nouvelle paire de valeurs mesurées est fusionnée avec des paires de valeurs mesurées déjà existantes.

8. Procédé selon la revendication 7, **caractérisé en ce que** les valeurs de température de référence (Tref) sont attribuées à des intervalles de température ($INT_n$) prédéfinis et des paires de valeurs mesurées attribuées seulement à un intervalle de température ($INT_n$) sont fusionnées les unes avec les autres.

9. Procédé selon la revendication 7 ou 8, **caractérisé en ce que** les valeurs de résistance (Rv) sont fusionnées en tenant compte de la fonction d'estimation.

10. Procédé selon l'une quelconque des revendications 7 à 9, **caractérisé en ce que** la fusion effectue une pondération, la nouvelle valeur de résistance (Rv) et/ou la nouvelle valeur de température de référence (Tref) s'accompagnant d'une plus faible pondération que la valeur de résistance (Rv) déjà existante et/ou la nouvelle valeur de température de référence (Tref).

11. Procédé selon l'une quelconque des revendications précédentes, **caractérisé en ce qu'**on utilise comme fonction d'estimation un polynôme du second degré, une fonction exponentielle, une droite et/ou une fonction libre, qui associe une courbe caractéristique de chauffage caractéristique et guidée par température extérieure à une courbe caractéristique température-résistance.

12. Procédé selon l'une quelconque des revendications précédentes, **caractérisé en ce que**, lors de la mise en service et/ou après une suppression de toutes les paires de valeurs mesurées, une fonction de démarrage est prédéfinie comme fonction d'estimation jusqu'à ce qu'une meilleure fonction d'estimation puisse être déterminée.

13. Procédé selon l'une quelconque des revendications précédentes, **caractérisé en ce que** des paires de valeurs mesurées, qui ne conviennent pas pour la fonction d'estimation trouvée, sont rejetées.

14. Dispositif pour influencer une valeur de mesure de température à l'entrée d'un régulateur de chauffage (8), le dispositif présentant

    - un branchement de mesure (2) pour le branchement d'un capteur de température aller ou de température extérieure (3) d'une installation de chauffage, qui édite une valeur de résistance (Rv) correspondant à la température aller ou la température extérieure,
    - un capteur de température de référence (6) raccordé à un branchement de référence (5),
    - un branchement de correction (17) pour la prédétermination d'une valeur de température de correction (dT),
    - un branchement de sortie (21) pour la sortie d'une valeur de résistance (Rs) simulée destinée au régulateur de chauffage (8),
    - un dispositif de courbe caractéristique (9) pour la détermination de la courbe caractéristique du capteur de température aller ou de température extérieure (3),
    - un dispositif de prédétermination (15) pour la détermination d'une valeur de résistance prédéterminée (Rv1) et
    - un dispositif de simulation (20) pour la simulation de la valeur de résistance (Rs) à sortir en fonction de la valeur de résistance prédéterminée (Rv1),

le dispositif de courbe caractéristique (9) étant aménagé pour adapter au moins deux fonctions d'estimation avec une forme de courbe différente par définition de paramètre aux paires de valeurs mesurées et pour sélectionner la courbe caractéristique sur la base de la qualité de l'adaptation des différentes fonctions d'estimation.

15. Dispositif selon la revendication 14, **caractérisé en ce que** le dispositif de courbe caractéristique (9) présente un dispositif (7) pour la détermination de la température de référence (Tref), une mémoire (10) pour le dépôt de la valeur mesurée, une mémoire (14) pour le dépôt de paramètre et une unité de calcul (11) pour la détermination de la courbe caractéristique.

16. Dispositif selon l'une quelconque des revendications 14 ou 15, **caractérisé en ce que** le dispositif de prédétermination (15) présente une unité de calcul (16) pour la détermination de la valeur de température (Tv) à partir de la valeur de résistance (Rv) avec l'utilisation de la courbe caractéristique et une unité de calcul (19) pour le calcul de la valeur de résistance prédéterminée (Rv1) à partie de la valeur de température prédéterminée (Tv1) avec l'utilisation de la courbe caractéristique.

17. Dispositif selon l'une quelconque des revendications 14 à 16, **caractérisé en ce que** le dispositif de simulation (20) présente une cascade de résistances qui peuvent à chaque fois être commutées en parallèle, afin de générer la valeur de résistance (Rs) simulée souhaitée.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4227515 A1
- DE 4023439 A1
- EP 1456727 B1
- DE 102005012597 A1